# EUROPÄISCHE PATENTANMELDUNG

(11) **EP 1 512 948 A1**
(43) Veröffentlichungstag der Anmeldung: **09.03.2005**
(21) Anmeldenummer: 03405640.8
(22) Anmeldetag: 03.09.2003
(51) Int. Cl.: G01F 1/68

(54) **Gasdurchflusssensor mit Strömungsdiagnostik**

(71) Anmelder: ABB RESEARCH LTD., 8050 Zürich (CH)
(72) Erfinder: Kleiner, Thomas, 5442 Fislisbach (CH); Matter, Daniel, 5200 Brugg (CH); Lutz, Michael, 63755 Alzenau-Wasserlos (DE); Horlebein, Eberhard, 63741 Aschaffenburg (DE)
(74) Vertreter: ABB Patent Attorneys

(57) **Zusammenfassung**

Die Erfindung betrifft ein Verfahren und eine Vorrichtung (1) zur Durchflussmessung von Gas (8) in industriellen Anwendungen. Gemäss Stand der Technik wird das Gas (8) über ein miniaturisiertes thermisches CMOS-Anemometer (2) geführt und ein Durchflusssignal gemessen. Erfindungsgemäss werden relativ hochfrequente Schwankungen des Durchflusssignals des CMOS-Anemometers (2) um ein mittleres Durchflusssignal gemessen, und es werden Pulsationen in der Gasströmung (8) aus dem Schwankungssignal bestimmt und angezeigt. Ausführungsbeispiele betreffen u.a.: Frequenzanalyse des Schwankungssignals; Berechnung des Schwankungssignal durch externe Rechenmittel (3a), die separat vom CMOS-Anemometer (2) vorhanden sind; und eine zusätzliche absolute Temperaturmessung (T_{abs}, 15) zur Druckschwankungsdiagnose via Joule-Thomson Effekt. Vorteile sind u.a.: kompaktes, robustes, schnelles thermisches Durchflussmessgerät (1) mit vielseitigen Signalanalysefunktionen.

## Beschreibung

### TECHNISCHES GEBIET

Die vorliegende Erfindung bezieht sich auf das Gebiet der Messung von Gasströmungen mit thermischen Durchflusssensoren. Sie geht aus von einem Verfahren zur Durchflussmessung, von einem Gasdurchflusssensor und von einer Verwendung des Gasdurchflusssensors gemäss Oberbegriff der unabhängigen Ansprüche.

### STAND DER TECHNIK

In der WO 01/18500 wird eine Massenflussmessung mit zwei thermischen CMOS-Anemometern offenbart. Das erste CMOS-Anemometer dient zur Massenflussmessung von Gasen oder Flüssigkeiten. Es besitzt ein Heizelement, welches zwischen zwei Temperatursensoren angeordnet ist. Die thermischen Sensorelemente sind zusammen mit einem Signalverstärker und A/D-Wandler gemeinsam auf demselben CMOS-Siliziumchip integriert. Die Temperaturdifferenz zwischen den beiden Temperatursensoren ist ein Mass für den Massenfluss. Das zweite CMOS-Anemometer ist identisch aufgebaut. Mit diesem werden am ruhenden Gas bei konstanter Heizleistung eine Wärmeleitfähgikeit und bei gepulster Heizleistung eine Wärmekapazität gemessen. Dadurch kann das Gas identifiziert werden und aus dessen spezifischen Heizwert zusammen mit der Massenflussmessung der totale Brennwert des Gases bestimmt werden. Es werden keine weiteren Gasdiagnosefunktionen angegeben.

In dem U. S. Pat. No. 5'750'892 wird eine Anordnung zur Strömungsmessung mit einem Durchflusssensor in einem Bypass offenbart, bei der im Hauptstrom ein langgestrecktes laminares Strömungselement mit einer Vielzahl von Strömungskanälen vorhanden ist und die Anschlüsse des Bypasses innerhalb der Längserstreckung des Strömungselements liegen. Dadurch kann der Druckabfall über das Strömungselement bzw. den Bypass als Funktion der Volumendurchflussrate weitgehend linear gehalten werden, da nichtlineare Anteile aufgrund turbulenter Strömungsanteile im Eintritts- und Mündungsbereich des Bypasses und aufgrund eines nichtkonstanten Strömungsquerschnitts minimiert werden.

In der WO 01/90702 wird ein magnetischer Durchflusssensor offenbart, der diskrete Bauelemente für Signalverstärkung, A/D-Wandlung und digitale Signalverarbeitung aufweist. Die Signale werden spektral analysiert, vorzugsweise durch diskrete Fourier-Transformation und insbesondere Fast-Fourier-Transformation. Im Frequenzspektrum werden spektrale Komponenten der Betriebsfrequenz des Magnetdurchflusssensors und seines Elektrodenrauschen identifiziert. Aus einer Betriebsfrequenzkomponente wird ein Durchflusssignal und aus einer Rauschkomponente ein Diagnosesignal bestimmt. Die spektrale Analyse dient also dazu, Nutz- und Störsignal effizient zu trennen und gegebenenfalls das Nutzsignal zu korrigieren. Fluktuationen in der Strömung werden dadurch nicht sichtbar gemacht.

In der WO 00/50851 wird ein Durchflussmessgerät offenbart, bei dem Fehlfunktionen des Sensorelements detektiert werden können. Hierfür werden die Sensordaten analysiert und mit historischen Messdaten des Sensors verglichen.

In der Verfahrenstechnik werden thermische Durchflusssensoren auf der Basis von Platin-Dünnschichtmesswiderständen auf Keramiksubstrat verwendet. Diese Durchflusssensoren sind robust, aber sehr träge mit Ansprechzeiten von bis zu 0,5 Sekunden. Für schnellere Applikationen im Prüfstandsbereich werden Widerstandselemente auf einem Glassubstrat aufgebracht. Die Widerstände sind im Messrohr in Flussrichtung hintereinander angeordnet. Aufgrund ihrer Grösse und hoher Übertemperaturen sind diese Durchflusssensoren relativ langsam mit typischen Ansprechzeiten von 15 ms - 20 ms und ihr Leistungsbedarf ist vergleichsweise hoch.

### DARSTELLUNG DER ERFINDUNG

Aufgabe der vorliegenden Erfindung ist es, ein Verfahren zur Durchflussmessung, ein Durchflussmessgerät für Fluide und eine Verwendung des Durchflussmessgeräts anzugeben, die sich durch verbesserte Diagnosemöglichkeit der Fluidströmung auszeichnen. Diese Aufgabe wird erfindungsgemäss durch die Merkmale der unabhängigen Ansprüche gelöst.

In einem ersten Aspekt besteht die Erfindung in einem Verfahren zur Durchflussmessung eines Fluids, insbesondere zur Durchflussmessung von Gas im industriellen Bereich, wobei das Fluid über ein CMOS-Anemometer geführt wird, das ein Heizelement und mindestens einen Temperatursensor sowie eine Auswerteelektronik umfasst, wobei aus dem Temperatursignal des Temperatursensors ein Durchflusssignal des CMOS-Anemometers ermittelt wird, wobei ferner Schwankungen des Durchflusssignals des CMOS-Anemometers um ein mittleres Durchflusssignal gemessen werden und aus dem Schwankungssignal Pulsationen in der Strömung des Fluids bestimmt und angezeigt werden. Auf diese Weise können erstmals mit einem thermischen Anemometer schnelle Schwankungen in Fluid- oder Gasströmungen erfasst und untersucht werden. Dies ist möglich, weil das CMOS-Anemometer aufgrund seiner starken Miniaturisierung eine geringe thermische Trägheit aufweist und seine Signalverarbeitung durch massvolle Einschränkung von Messauflösung und Messgenauigkeit auf eine schnelle Ansprechzeit ausgelegt werden kann.

Das Ausführungsbeispiel gemäss Anspruch 2 hat den Vorteil, dass das Durchflusssignal unmittelbar spektral analysiert werden kann und aus spezifischen Frequenzkomponenten von Druck- oder Strömungsschwankungen im Gasstrom genauer auf mögliche Ursachen der Pulsationen geschlossen werden kann.

Das Ausführungsbeispiel gemäss Anspruch 3a hat den Vorteil, dass durch Vorhandensein externer Rechenmittel zur Schwankungssignalanalyse eine grosse Rechenleistung und vielseitige Möglichkeiten zur Datenanalyse und Datendarstellung vorhanden sind.

Das Ausführungsbeispiel gemäss Anspruch 3b hat den Vorteil, dass mit dem CMOS-Anemometer Pulsationen oder Druckschwankungen im Fluid bis zu vielen 100 Hz Frequenz untersucht werden können. Dies ermöglicht erstmals den Einsatz des CMOS-Anemometers zur schnellen und stöchiometrisch exakten Gasmengenmessung in Chemie und Verfahrenstechnik, für schnelle Gasbrennersteuerungen, für schnelle Luftregelungen in Gebäuden, in Kläranlagen oder in Luftzerlegern, oder in Prüfständen für Verbrennungsmotoren. Beispielsweise können relativ hochfrequente Pulsationen in der Ansaugluft von Kolbenmotoren detektiert und analysiert werden und dadurch wertvolle Informationen ermittelt und zur Prozessoptimierung herangezogen werden. Mit den langsameren Ansprechzeiten der herkömmlichen Durchflussmessgeräte ist dies nicht möglich.

Das Ausführungsbeispiel gemäss Anspruch 4 hat den Vorteil, dass durch eine vom CMOS-Anemometer unabhängige Messung zusätzliche Informationen über Druckänderungen im Gas gewonnen werden können.

In einem weiteren Aspekt besteht die Erfindung in einem Durchflussmessgerät zur Durchflussmessung eines Fluids, insbesondere zur Durchflussmessung von Gas in industriellen Anwendungen, umfassend ein CMOS-Anemometer mit einem Heizelement und mindestens einem stromaufwärts und/oder stromabwärts angeordneten Temperatursensor und mit einer Auswerteelektronik, wobei das CMOS-Anemometer zur Messung von Schwankungen des Durchflusssignals des CMOS-Anemometers um ein mittleres Durchflusssignal ausgelegt ist und externe Rechenmittel vorhanden sind, durch die das Schwankungssignal erfasst und analysiert werden kann.

Weitere Ausführungen, Vorteile und Anwendungen der Erfindung ergeben sich aus abhängigen Ansprüchen sowie aus der nun folgenden Beschreibung und den Figuren.

### KURZE BESCHREIBUNG DER ZEICHNUNGEN

Es zeigen:
- Fig. 1: eine schematische Draufsicht auf ein erfindungsgemässes Durchflussmessgerät;
- Fig. 2: im Querschnitt eine schematische Darstellung einer Durchflussmessung mit Durchflussmessgerät im Bypass;
- Fig. 3a-3c: Frequenzspektren, die mit einem erfindungsgemässen Durchflussmessgerät gemessen sind; und
- Fig. 4: eine Messkurve der Absoluttemperatur zur Detektion von Druckschwankungen im Gas.

In den Figuren sind gleiche Teile mit gleichen Bezugszeichen versehen.

### WEGE ZUR AUSFÜHRUNG DER ERFINDUNG

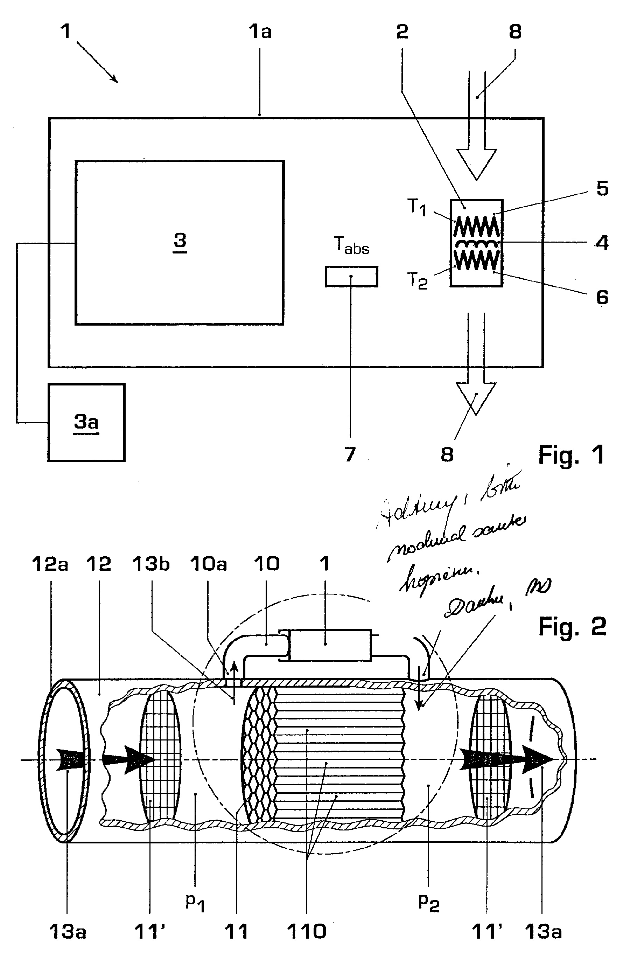

Fig. 1 zeigt ein Ausführungsbeispiel eines erfindungsgemässen Durchflussmessgeräts 1 mit einem thermischen Durchflusssensor 2 in Gestalt eines CMOS-Anemometers 2, das aus der eingangs erwähnten WO 01/18500 an sich bekannt ist. Der Offenbarungsgehalt dieser Schrift sei hiermit durch Bezugnahme in die Beschreibung mit aufgenommen. Das CMOS-Anemometer 2 umfasst einen Heizdraht 4 und stromaufwärts und/oder stromabwärts davon, bevorzugt stromaufwärts und stromabwärts, typischerweise je einen Temperatursensor 5, 6 sowie eine Auswerteelektronik 3 umfassend digitale Rechenmittel (nicht dargestellt) zur Bestimmung eines Durchflusssignals des Fluids 8 aus mindestens einem Temperatursignal T₁, T₂ von mindestens einem der Temperatursensoren 5, 6. Das Fluid 8 kann eine Flüssigkeit oder ein Gas 8 sein. Erfindungsgemäss ist das CMOS-Anemometer 2 zur Messung von Schwankungen des Durchflusssignals des CMOS-Anemometers 2 um ein mittleres Durchflusssignal ausgelegt und es sind zusätzliche externe Rechenmittel 3a vorhanden, durch die das Schwankungssignal erfasst und analysiert werden kann.

Bevorzugt umfassen die externen Rechenmittel 3a einen Frequenzanalysator 3a zur Bestimmung eines Frequenzspektrums, insbesondere eines Fourierspektrums, des Durchflusssignals. Prinzipiell können die externen Rechenmittel 3a eine externe Rechenapparatur, z. B. ein Computer oder ein digitales Speicheroszilloskop, sein. Hingegen ist die bereits bekannte Auswerteelektronik 3, wie in Fig. 1 dargestellt, mitsamt ihrer digitalen Recheneinheit zusammen mit dem CMOS-Anemometer 2 auf einem gemeinsamen CMOS-Siliziumchip 1a angeordnet und dienen der bisher bekannten Bildung von gemittelten Durchflusssignalen des Durchflussmessgeräts 1. Neu soll eine Bandbreite des CMOS-Anemometers 2 und der externen Rechenmittel 3a für das Schwankungssignal grösser als 100 Hz, bevorzugt grösser als 200 Hz, besonders bevorzugt grösser als 400 Hz, insbesondere grösser als 1 kHz, gewählt sein. Dadurch sind auch schnelle und schnellste Pulsationen oder Druckschwankungen messbar und können hinsichtlich ihrer Verursachungsquelle untersucht werden.

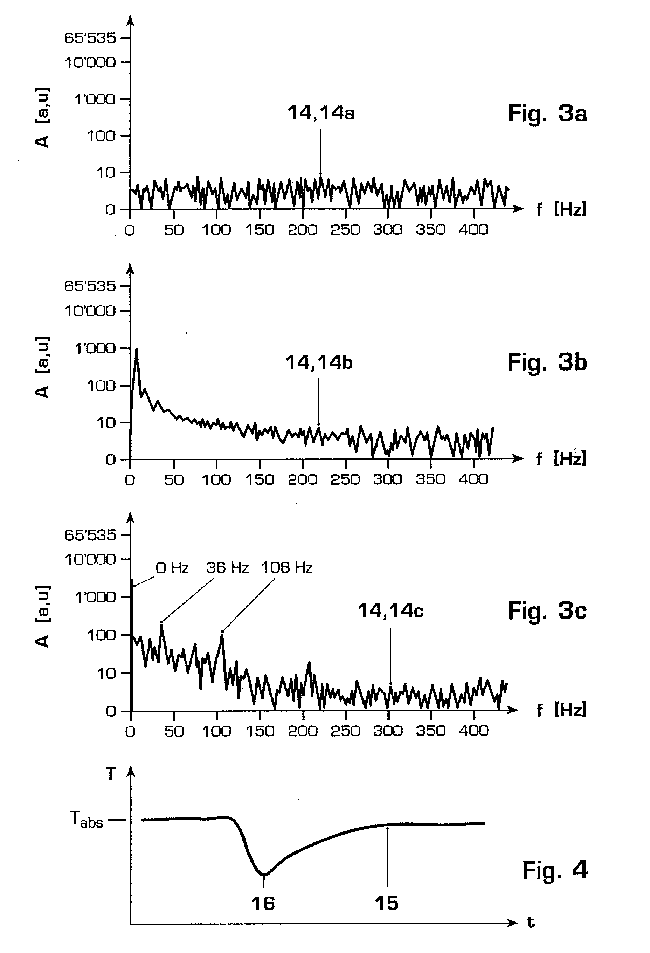

Zusätzlich kann ein Temperaturmesser 7, insbesondere ein Bandgap-Temperaturmesser 7, zur Messung der absoluten Temperatur T_{abs} vorhanden sein. In Fig. 4 ist ein entsprechendes absolutes Temperatursignal T_{abs}, 15 als Funktion der Zeit t dargestellt. Eine plötzliche Änderung 16 im Temperatursignal T_{abs}, 15 kann via Joule-Thomson Effekt als Druckänderung im Fluid oder Gas 8 interpretiert werden. Der Joule-Thomson Effekt besteht nämlich darin, dass eine plötzliche Druckänderung in einem Gas eine Änderung der Gastemperatur verursacht. Für diese Fortbildung soll die Auswerteelektronik 3 ein Hilfsmittel zur Umrechnung von absoluten Temperaturänderungen in Druckänderungen im Fluid 8 umfassen. Ein plötzliches Anheben oder Abfallen 16 des absoluten Temperaturniveaus T_{abs} kann also als Druckanstieg oder Druckabfall interpretiert werden, insbesondere wenn die Durchflussrate sehr klein oder Null ist, weil dann Temperaturänderungen nicht durch einen veränderlichen Massen- oder Volumenstrom 8 verursacht sein können. Somit kann die Auswertung der absoluten Temperaturmessung auch in Funktion des Durchflusssignals des CMOS-Anemometers erfolgen und nur bei hinreichend kleinen Durchflusssignalen eine Druckänderung diagnostiziert werden.

Das erfindungsgemässe Verfahren umfasst die Schritte, dass Schwankungen des Durchflusssignals des CMOS-Anemometers 2 um ein mittleres Durchflusssignal gemessen werden und aus dem Schwankungssignal Pulsationen in der Strömung des Fluids 8 bestimmt und angezeigt werden. Es werden also das Durchflusssignal als Funktion der Zeit mit einer hinreichenden Schnelligkeit erfasst. Zusätzlich ist, wie bisher üblich, ein mittlerer Durchfluss durch Integration des Durchflusssignals bestimmbar. In früheren Anwendungen des CMOS-Anemometers 2 war dieses integrale Durchflusssignal das einzige Ausgabesignal des CMOS-Anemometers 2. Es können also aus einer relativ schnellen Zeitabhängigkeit des Durchflusssignals des CMOS-Anemometers 2 Pulsationen in der Fluidströmung detektiert und angezeigt werden. Bei den Pulsationen handelt es sich um Schwankungen des Durchflusssignals um einen mittleren Durchflusswert. Die Pulsationen werden als Störungen in der Fluidströmung 8 interpretiert und können gegebenenfalls spezifischen Störquellen zugeordnet werden.

Bevorzugt wird im Verfahren aus dem Durchflusssignal ein Frequenzspektrum bestimmt und das Frequenzspektrum hinsichtlich der Pulsationen analysiert. Insbesondere wird das Durchflusssignal mittels Fourier-Transformation, Fast-Fourier-Transformation oder diskreter Fourier-Transformation spektral analysiert. Hierfür wird das Schwankungssignal durch die externen Rechenmittel 3a erfasst und analysiert.

Eine Grenzfrequenz zur Analyse von Pulsationen ist durch das Inverse der Ansprechzeit des CMOS-Anemometers 2 und insbesondere der externen Rechenmittel 3a gegeben. Vorzugsweise wird das CMOS-Anemometer 2 mit einer digitalen Auflösung von maximal 12 Bit und mit einer Ansprechzeit von schneller als 10 ms, insbesondere mit maximal 9 Bit Auflösung und einer Ansprechzeit schneller als 1,5 ms, betrieben.

Fig. 2 zeigt eine Durchflussmessanordnung 1 umfassend ein erfindungsgemässes Durchflussmessgerät 2, das in einem Messkanal oder Bypass 10 angeordnet ist, und ein Differenzdruckmittel 11, das in der Hauptleitung 12 angeordnet ist. Dem Differenzdruckmittel 11 vor- und/oder nachgeschaltet sind Schutzgitter 11' vorhanden. Diese wirken als Turbulator zur Erzeugung einer definierten turbulenten Strömung und damit zur Eliminierung der Strömungsvorgeschichte. Der Bypass 10 ist hier beispielhaft und vorteilhaft an einer Seitenwand 12a der Gasleitung 12 angeordnet und weist im Bereich der Abzweigungen eine Eintrittsöffnung 10a und eine Austrittsöffnung 10b an der Seitenwand 12a auf. Der Bypass 10 ist hier im wesentlichen parallel zur Gasleitung 12 erstreckt. Andere, nicht dargestellte Anordnungen, Abzweigungen und Formen des Bypasses 3 sind ebenfalls möglich. In der Gasleitung 12 strömt ein Hauptgasstrom 13a, von dem ein kleiner Bypass-Gasstrom 13b abgezweigt wird. Das Abzweigungsverhältnis, d. h. das Verhältnis der Volumenflüsse 13b zu 13a, wird hauptsächlich durch das Differenzdruckmittel 11 vorgegeben. Bevorzugt ist das Abzweigungsverhältnis hinreichend linear, so dass ein Frequenzspektrum im Bypass-Gasstrom 13b ein genaues Abbild eines Frequenzspektrums in der Hauptströmung 13a ist. Die Linearität kann, wie in Fig. 2 dargestellt, z. B. dadurch erreicht werden, dass das Differenzdruckmittel 11 eine Bienenwabenstruktur mit Kanälen 110 aufweist, in denen eine laminare Strömung vorherrscht und durch die ein Druckabfall p₂-p₁ zwischen einem Druck p₁ vor und einem Druck p₂ hinter dem Differenzdruckmittel erzeugt wird. Der Differenzdruck p₂-p₁ treibt den Bypass-Gasstrom 13b an. Das Differenzdruckmittel 11 kann anstelle einer dünnwandigen Bienenwabenstruktur 11 beispielsweise auch ein Rohrbündel oder ein Venturirohr sein.

Die Fig. 3a - Fig. 3c zeigen experimentelle Frequenzspektren (A=Amplitude oder Amplitudenquadrat und f=Frequenz), die mit einem Prototypen-Durchflussmessgerät 1 aufgenommen wurden. Hierfür wurde das digitale Durchflusssignal des CMOS-Anemometers 2 in einer externen und hier digitalen Recheneinheit 3a mit einer FFT (Fast Fourier Transformation) in die gezeigten Frequenzspektren 14 umgerechnet.

In Fig. 3a ist ein Spektrum 14a ohne Durchfluss dargestellt. Es ist lediglich das Grundrauschen zu sehen. Bei einem idealen, störungsfreien konstanten Durchfluss wird eine DC-Komponente bei 0 Hz hinzukommen und das Grundrauschen wird unverändert bleiben.

In Fig. 3b ist ein Spektrum 14b gezeigt, das durch Schütteln des Durchflussmessgeräts 1 entlang der Achse des Durchflusses 8 erzeugt wurde. Auf diese Weise können Vibrationen auf einem Messstand simuliert werden. Durch die Trägheit des Gasstroms 8 im Innern des Durchflussmessgeräts 1 strömt das Gas 8 vorwärts und rückwärts am CMOS-Anemometer 2 vorbei. Dabei entsteht ein bei den niedrigen Frequenzen der Schüttelbewegung erhöhtes Frequenzspektrum 14b. Die DC-Komponente bleibt auf dem Niveau des Grundrauschens, da der über die Zeit gemittelte Durchfluss 8 gleich Null ist. Auf mechanische Schwingungen quer zur Mess- oder Strömungsrichtung 8 ist das Durchflussmessgerät 1 nicht empfindlich.

Fig. 3c zeigt ein Frequenzspektrum 14c, bei dem von einem Ventilator Luft durch das Durchflussmessgerät 1 geblasen wurde. Mit Hilfe der FFT werden nun charakteristische Frequenzen bei 0 Hz, 36 Hz und 108 Hz und sogar bei 216 Hz detektiert. Es sind also Schwingungen im Luftstrom 8 erkennbar. Die 0 Hz Komponente gibt den mittleren Durchfluss an, der sich auch durch Zeitmittelung des Durchflusssignals ergibt. Die 36 Hz Komponente zeigt eine Luftschwingung an, die durch einen unrunden Lauf des Ventilators verursacht ist. Die 108 Hz Komponente ist die dritte Oberschwingung der fundamentalen Störfrequenz von 36 Hz und ist dadurch verursacht, dass der Ventilator dreiflügelig ist; sie entspricht einer Übertragung der Störung auf jedes der drei Ventilatorblätter. Es können also eine Grundschwingung und/oder Oberschwingungen der Pulsationen analysiert werden.

Das oben diskutierte Durchflussmessgerät 1 wird vorzugsweise verwendet: in der Prozessindustrie für schnelle und genaue Gasmengenmessungen und insbesondere für Massendurchflussmessungen zur stöchiometrischen Gasmengenbestimmung in Chemie und Verfahrenstechnik, für eine Druckluftbilanzierung, für eine Gasbrennersteuerung, für eine Faulgas- und Belebungsluftregelung in Kläranlagen, zur Gasmessung an Luftzerlegern, oder in Prüfständen zur Entwicklung und Prüfung von Verbrennungsmotoren.

### BEZUGSZEICHENLISTE

- 1: Durchflussmessgerät, CMOS-Siliziumchip
- 1a: CMOS-Siliziumchip
- 2: CMOS-Anemometer, thermischer Durchflusssensor
- 3: Auswerteelektronik, Messeinheit
- 3a: elektronische Mittel zur Schwankungssignal- oder Frequenzanalyse, externe Rechenmittel
- 4: Heizelement
- 5, 6: Temperatursensoren, Thermoelemente
- 7: Temperaturmesser für Absoluttemperatur
- 8: Fluidströmung, Gasströmung
- 9: Durchflussmessanordnung
- 10: Bypass
- 10a: Bypass-Eintrittsöffnung
- 10b: Bypass-Austrittsöffnung
- 11: Differenzdruckmittel
- 11': Schutzgitter
- 110: Strömungskanäle, Röhrchen
- 12: Strömungskanal, Rohr, Hauptleitung
- 12a: Seitenwand der Hauptleitung
- 13a: Volumenfluss in Hauptleitung
- 13b: Volumenfluss in Bypassleitung
- 14, 14a-14c: Frequenzspektren
- 15: Temperaturkurve
- 16: Temperaturabfall

- A: Frequenzamplitude
- p₁, p₂: Druck vor, nach Differenzdruckmittel
- t: Zeit
- T₁, T₂: Relativtemperaturen
- T_{abs}: Absoluttemperatur

## Patentansprüche

1. Verfahren zur Durchflussmessung eines Fluids (8), insbesondere zur Durchflussmessung von Gas (8) im industriellen Bereich, wobei das Fluid (8) über ein CMOS-Anemometer (2) geführt wird, das ein Heizelement (4) und mindestens einen Temperatursensor (5, 6) sowie eine Auswerteelektronik (3) umfasst, wobei aus dem Temperatursignal (T₁, T₂) des Temperatursensors (5, 6) ein Durchflusssignal des CMOS-Anemometers (2) ermittelt wird, **dadurch gekennzeichnet, dass**
a) Schwankungen des Durchflusssignals des CMOS-Anemometers (2) um ein mittleres Durchflusssignal gemessen werden und
b) aus dem Schwankungssignal Pulsationen in der Strömung des Fluids (8) bestimmt und angezeigt werden.

2. Verfahren zur Durchflussmessung nach Anspruch 1, **dadurch gekennzeichnet, dass**
a) aus dem Durchflusssignal ein Frequenzspektrum (14, 14a, 14b, 14c) bestimmt wird und das Frequenzspektrum (14, 14a, 14b, 14c) hinsichtlich der Pulsationen analysiert wird und
b) insbesondere dass das Durchflusssignal mittels Fourier-Transformation, Fast-Fourier-Transformation oder diskreter Fourier-Transformation spektral analysiert wird.

3. Verfahren zur Durchflussmessung nach einem der vorangehenden Ansprüche, **dadurch gekennzeichnet, dass**
a) das Schwankungssignal durch externe Rechenmittel (3a) erfasst und analysiert wird, die extern vom CMOS-Siliziumchip (1a) angeordnet sind und/oder
b) das CMOS-Anemometer (2) mit einer digitalen Auflösung von maximal 12 Bit und mit einer Ansprechzeit von schneller als 10 ms, insbesondere mit maximal 9 Bit Auflösung und einer Ansprechzeit schneller als 1,5 ms, betrieben wird.

4. Verfahren zur Durchflussmessung nach einem der vorangehenden Ansprüche, **dadurch gekennzeichnet, dass** zusätzlich eine absolute Temperatur (T_{abs}, 15) gemessen wird und aus Änderungen (16) der absoluten Temperatur (T_{abs}, 15) mittels Joule-Thomson Effekt plötzliche Druckänderungen in dem Fluid (8) detektiert werden.

5. Verfahren zur Durchflussmessung nach einem der vorangehenden Ansprüche, **dadurch gekennzeichnet, dass**
a) das Fluid (8) ein Gas (8) ist und/oder
b) das Durchflussmessgerät (1) in einem Bypass (10) zu einer Hauptleitung (12) angeordnet ist, wobei ein hinreichend lineares Abzweigungsverhältnis zwischen einem Volumenfluss (13b) im Bypass (10) zu einem Volumenfluss (13a) in der Hauptleitung (12) vorhanden ist und/oder
c) eine Grundschwingung und/oder Oberschwingungen der Pulsationen analysiert wird oder werden.

6. Durchflussmessgerät (1) zur Durchflussmessung eines Fluids (8), insbesondere zur Durchflussmessung von Gas (8) im industriellen Bereich, umfassend ein CMOS-Anemometer (2) mit einem Heizelement (4) und mindestens einem stromaufwärts und/oder stromabwärts angeordneten Temperatursensor (5, 6) und mit einer Auswerteelektronik (3), **dadurch gekennzeichnet, dass**
a) das CMOS-Anemometer (2) zur Messung von Schwankungen des Durchflusssignals des CMOS-Anemometers (2) um ein mittleres Durchflusssignal ausgelegt ist und
b) externe Rechenmittel (3a) vorhanden sind, durch die das Schwankungssignal erfasst und analysiert werden kann.

7. Das Durchflussmessgerät (1) nach Anspruch 6, **dadurch gekennzeichnet, dass**
a) die externen Rechenmittel (3a) einen Frequenzanalysator (3a) zur Bestimmung eines Frequenzspektrums (14, 14a, 14b, 14c), insbesondere eines Fourierspektrums (14, 14a, 14b, 14c), des Durchflusssignals umfassen und/oder
b) eine Bandbreite des CMOS-Anemometers (2) und der externen Rechenmittel (3a) für das Schwankungssignal grösser als 100 Hz, bevorzugt 200 Hz, besonders bevorzugt 400 Hz, insbesondere 1 kHz, gewählt ist.

8. Das Durchflussmessgerät (1) nach einem der Ansprüche 6-7, **dadurch gekennzeichnet, dass** das Durchflussmessgerät (1) in einem Bypass (10) zu einer Hauptleitung (12) angeordnet ist, wobei ein lineares Abzweigungsverhältnis zwischen einem Volumenfluss (13b) im Bypass (10) zu einem Volumenfluss (13a) in der Hauptleitung (12) vorhanden ist.

9. Das Durchflussmessgerät (1) nach einem der Ansprüche 6-8, **dadurch gekennzeichnet, dass**
a) ein Temperaturmesser (7), insbesondere ein Bandgap-Temperaturmesser (7), zur Messung der absoluten Temperatur (T_{abs}, 15) vorhanden ist und die Auswerteelektronik (3) Hilfsmittel zur Umrechnung von absoluten Temperaturänderungen (16) in Druckänderungen im Fluid (8) aufgrund des Joule-Thomson Effekts umfasst und
b) insbesondere dass der Temperaturmesser (7) zusammen mit dem CMOS-Anemometer (2) und Hilfsmitteln zur Umrechnung von absoluten Temperaturänderungen in Druckänderungen im Fluid (8) auf einem gemeinsamen CMOS-Siliziumchip (1a) integriert ist.

10. Verwendung eines Durchflussmessgeräts (1) gemäss einem der Ansprüche 6-9 in der Prozessindustrie für schnelle und genaue Gasmengenmessungen und insbesondere für Massendurchflussmessungen zur stöchiometrischen Gasmengenbestimmung in Chemie und Verfahrenstechnik, für eine Druckluftbilanzierung, für eine Gasbrennersteuerung, für eine Faulgas- und Belebungsluftregelung in Kläranlagen, zur Gasmessung an Luftzerlegern, oder in Prüfständen zur Entwicklung und Prüfung von Verbrennungsmotoren.
